# EUROPEAN PATENT APPLICATION

(11) **EP 1 653 736 A1**
(43) Date of publication of application: **03.05.2006**
(21) Application number: 04748094.2
(22) Date of filing: 23.07.2004
(51) Int. Cl.: H04N 5/63

(54) **POWER SAVING CONTROL DEVICE AND METHOD**

(30) Priority: 25.07.2003 JP 2003279809
(71) Applicant: MATSUSHITA ELECTRIC INDUSTRIAL CO., LTD., Kadoma-shi, Osaka 571-8501 (JP)
(72) Inventor: ODA, Akihiro, Osaka 536-0012 (JP); HARAYAMA, Shigeru, Osaka 563-0214 (JP); HIGASHIDA, Takashi, Kobe-shi Hyogo 658-00032 (JP); HIGA, Koujirou, Osaka 569-0822 (JP)
(74) Representative: Eisenführ, Speiser & Partner
(86) International application number: PCT/JP2004/010887
(87) International publication number: WO 2005/011267

(57) **Abstract**

A television receiver system is configured to include a television receiver apparatus (100) and a remote control apparatus (200). The television receiver apparatus (100) outputs one of video and audio signals on a received broadcast wave and video and audio signals inputted from an external electronic equipment (300), and transmits the video and audio signals by radio. The remote control apparatus (200) controls an operation of the television receiver apparatus (100), and receives and outputs the video and audio signals transmitted by radio. A power saving control apparatus for the television receiver system controls turning off power supply to at least one part of means of the television receiver apparatus (100) upon receiving a predetermined instruction signal from the remote control apparatus (200).

## Description

### TECHNICAL FIELD

The present invention relates to a power saving control apparatus and a power saving control method for a television receiver system, that includes a television receiver apparatus and a remote control apparatus for the television receiver apparatus. The present invention also relates to a television receiver apparatus that includes the power saving control apparatus, and a television receiver system that includes the television receiver apparatus.

### BACKGROUND ART

Recently, a technique for radio transmission of video and audio signals has been rapidly developing. A radio transmission system configured by a transmitter apparatus and a receiver apparatus has gradually become popular. A television receiver apparatus configured to include a receiver apparatus has also gradually become popular. In the latter case, the television receiver apparatus is often replaced by a personal computer.

As a further configuration of applications, a radio transmitter apparatus for transmitting video and audio signals by radio between, for example, a television receiver apparatus and a remote control apparatus for the television receiver apparatus is disclosed in, for example, the Japanese Patent Laid-Open Publication No. 11-69463 (hereinafter referred to as a first prior art example). The television receiver includes a transceiver section that transmits a reproduced video signal and the like by radio. The remote control apparatus includes a transceiver section and a display apparatus as well as operation buttons for operating the television receiver. The transceiver section transmits the video signal and the like by radio. The display apparatus displays specified video signal and the like.

Further, an energy management system including a remote control apparatus for controlling of supplying an electric power to an external electronic equipment is disclosed in, for example, the Japanese Patent Laid-Open Publication No. 2000-152522 (hereinafter referred to as a second prior art example). The system includes, for example, occupant detection means and the remote control apparatus for transmitting a signal to a terminal apparatus by radio. The system allows power supply connection control means to output an electric power supply control signal based on detection of someone's existence in a predetermined room by the occupant detection means.

Moreover, apparatuses for remotely controlling electronic equipments such as a television receiver apparatus or the like are disclosed in, for example, the following documents:
(1) the Japanese Patent Laid-Open Publication No. 2002-291065;
(2) the Japanese Patent Laid-Open Publication No. 2003-179774;
(3) the Japanese Patent Laid-Open Publication No. 2003-219486; and
(4) the Japanese Patent Laid-Open Publication No. 2003-259464.

### DISCLOSURE OF THE INVENTION

However, the above-stated prior arts have the following problems.

According to the first prior art, as for the television receiver apparatus that includes a plurality of video and audio output functions in the same system, a user occasionally uses only one video and audio output function so as to view and listen television programs while the other video and audio output functions are unnecessary. In particular, video and audio signals are transmitted by radio between, for example, the television receiver apparatus and the remote control apparatus for the television receiver apparatus. Therefore, if such an audio and visual environment is supposed that the user views and listens television programs using the remote control apparatus away from the television receiver apparatus such as in a different room, the video and audio output functions of the main body of the television receiver apparatus always output the video and audio signals despite no need to do so. As a result, the electric power is wastefully consumed.

Further, as for the television receiver apparatus to which a plurality of external connection equipments such as a video recorder and a CATV receiver apparatus are connected, the connection equipments other than the external connection equipment that is used by a user to view and listen television programs are away from the television receiver apparatus. Due to this, it is difficult for the user to recognize a power supply state of the connection equipments. In addition, unless the user intentionally turns off power supply to the unused equipments, the electric power is supplied to the equipments while the equipments are operative. As a result, the electric power is wastefully consumed.

According to the second prior art, since some users use the external electronic equipment and the remote control apparatus in the same room, the control system relating to the electric power management based on the detection of someone's existence in the room can not transfer the external electronic equipment to the power saving state.

It is an object of the present invention to provide a power saving control apparatus and a power saving control method capable of solving the above-stated problems, and controlling a television receiver apparatus to be efficiently transferred to a power saving state.

It is another object of the present invention to provide a television receiver apparatus including the power saving control apparatus, and a television receiver system including the television receiver apparatus.

According to the first aspect of the present invention, there is provided a power saving control apparatus for a television receiver system. The television receiver system includes a television receiver apparatus and a remote control apparatus. The television receiver apparatus outputs one of video and audio signals on a received broadcast wave and video and audio signals inputted from an external electronic equipment, and transmits the video and audio signals by radio. The remote control apparatus controls an operation of the television receiver apparatus, and receives and outputs the video and audio signals transmitted by radio. The power saving control apparatus includes power saving means for turning off power supply to at least one part of means of the television receiver apparatus upon receiving a predetermined instruction signal from the remote control apparatus.

In the above-mentioned power saving control apparatus, the instruction signal is a power saving transfer instruction message for instructing the television receiver apparatus to transfer to a power saving state by turning off the power supply to at least one part of means of the television receiver apparatus. Alternatively, in the above-mentioned power saving control apparatus, the instruction signal is a video and audio signals transmission instruction message for instructing the television receiver apparatus to transmit the video and audio signals from the television receiver apparatus to the remote control apparatus by radio. Alternatively, in the above-mentioned power saving control apparatus, the instruction signal is a video and audio signals transmission instruction message for instructing the television receiver apparatus to transmit the video and audio signals from the television receiver apparatus to the remote control apparatus by radio, and the power saving means turns off the power supply to at least one part of means of the television receiver apparatus, upon receiving the instruction signal from the remote control apparatus, and in an automatic power saving function mode set in the television receiver apparatus.

In addition, in the above-mentioned power saving control apparatus, at least one part of means of the television receiver apparatus includes display means for displaying an image of the video signal, and audio output means for outputting a voice of the audio signal.

According to the second aspect of the present invention, there is provided a power saving control method for a television receiver system. The television receiver system includes a television receiver apparatus and a remote control apparatus. The television receiver apparatus outputs one of video and audio signals on a received broadcast wave and video and audio signals inputted from an external electronic equipments, and transmits the video and audio signals by radio. The remote control apparatus controls an operation of the television receiver apparatus, and receives and outputs the video and audio signals transmitted by radio. The power saving control method includes a power saving step of turning off power supply to at least one part of means of the television receiver apparatus upon receiving a predetermined instruction signal from the remote control apparatus.

In the above-mentioned power saving control method, the instruction signal is a power saving transfer instruction message for instructing the television receiver apparatus to transfer to a power saving state by turning off the power supply to at least one part of means of the television receiver apparatus. Alternatively, in the above-mentioned power saving control method, the instruction signal is a video and audio signals transmission instruction message for instructing the television receiver apparatus to transmit the video and audio signals from the television receiver apparatus to the remote control apparatus by radio. Alternatively, in the above-mentioned power saving control method, the instruction signal is a video and audio signals transmission instruction message for instructing the television receiver apparatus to transmit the video and audio signals from the television receiver apparatus to the remote control apparatus by radio, and the power saving step turns off the power supply to at least one part of means of the television receiver apparatus, upon receiving the instruction signal from the remote control apparatus, and in an automatic power saving function mode set in the television receiver apparatus.

In addition, in the above-mentioned power saving control method, at least one part of means of the television receiver apparatus includes display means for displaying an image of the video signal, and audio output means for outputting a voice of the audio signal.

According to the third aspect of the present invention, there is provided a power saving control apparatus for a television receiver system. The television receiver system includes a television receiver apparatus and a remote control apparatus. The television receiver apparatus outputs video and audio signals inputted from an external electronic equipment, and transmits the video and audio signals by radio. The remote control apparatus controls an operation of the television receiver apparatus, controls an operation of the external electronic equipment via the television receiver apparatus, and receives and outputs the video and audio signals transmitted by radio. The power saving control apparatus includes control means for controlling turning off power supply to the external electronic equipment upon receiving a predetermined instruction signal from the remote control apparatus.

In the above-mentioned power saving control apparatus, the television receiver apparatus further includes switching means for selectively switching video and audio signals from a plurality of external electronic equipments, and for outputting the selected video and audio signals, and the control means controls the switching means to selectively switch over to one of the plurality of external electronic equipments, and controls turning off power supply to one of the external electronic equipments having been selected before switching over upon receiving an instruction signal including an external electronic equipment switching instruction message for selectively switching over to the one of the plurality of external electronic equipments from the remote control apparatus.

In addition, in the above-mentioned power saving control apparatus, the control means transmits the video and audio signals from the selected external electronic equipment to the remote control apparatus by radio.

Further, in the above-mentioned power saving control apparatus, the control means turns off power supply to at least one part of means of the television receiver apparatus.

Still further, in the above-mentioned power saving control apparatus, at least one part of means of the television receiver apparatus includes at least one of reception means for receiving a broadcast wave of the television receiver apparatus; and display means for displaying an image of the video signal, and audio output means for outputting a voice of the audio signal.

According to the fourth aspect of the present invention, there is provided a power saving control method for a television receiver system. The television receiver system includes a television receiver apparatus and a remote control apparatus. The television receiver apparatus outputs video and audio signals inputted from an external electronic equipment, and transmits the video and audio signals by radio. The remote control apparatus controls an operation of the television receiver apparatus, controls an operation of the external electronic equipment via the television receiver apparatus, and receives and outputs the video and audio signals transmitted by radio. The power saving control method includes a control step of controlling turning off power supply to the external electronic equipment upon receiving a predetermined instruction signal from the remote control apparatus.

In the above-mentioned power saving control method, the television receiver apparatus further includes switching means for selectively switching video and audio signals from a plurality of external electronic equipments, and for outputting the selected video and audio signals, and the control step controls the switching means to selectively switch over to one of the plurality of external electronic equipments, and controls turning off power supply to one of the external electronic equipments having been selected before switching over upon receiving an instruction signal including an external electronic equipment switching instruction message for selectively switching over to the one of the plurality of external electronic equipments from the remote control apparatus.

In addition, in the above-mentioned power saving control method, the control step transmits the video and audio signals from the selected external electronic equipment to the remote control apparatus by radio.

Further, in the above-mentioned power saving control method, the control step turns off power supply to at least one part of means of the television receiver apparatus.

Still further, in the above-mentioned power saving control method, at least one part of means of the television receiver apparatus includes at least one of reception means for receiving a broadcast wave of the television receiver apparatus; and display means for displaying an image of the video signal, and audio output means for outputting a voice of the audio signal.

According to the fifth aspect of the present invention, there is provided a television receiver apparatus for outputting one of video and audio signals on a received broadcast wave and video and audio signals inputted from an external electronic equipment, and transmitting the video and audio signals by radio. The television receiver apparatus includes the above-mentioned power saving control apparatus.

According to the sixth aspect of the present invention, there is provided a television receiver system including a television receiver apparatus and a remote control apparatus. The television receiver apparatus outputs one of video and audio signals on a received broadcast wave and video and audio signals inputted from an external electronic equipment, and transmits the video and audio signals by radio. The remote control apparatus controls an operation of the television receiver apparatus, and receives and outputs the video and audio signals transmitted by radio. The television receiver system includes the above-mentioned power saving control apparatus.

According to the seventh aspect of the present invention, there is provided a television receiver apparatus for outputting video and audio signals inputted from an external electronic equipment, and transmitting the video and audio signals by radio. The television receiver apparatus includes the above-mentioned power saving control apparatus.

According to the eighth aspect of the present invention, there is provided a television receiver system including a television receiver apparatus and a remote control apparatus. The television receiver apparatus outputs video and audio signals inputted from an external electronic equipment, and transmits the video and audio signals by radio. The remote control apparatus controls an operation of the television receiver apparatus, controls the external electronic equipment via the television receiver apparatus, and receives and outputs the video and audio signals transmitted by radio. The television receiver system includes the above-mentioned power saving control apparatus.

Therefore, according to the power saving control apparatus and the power saving control method of the present invention, the power saving control apparatus for the television receiver system including the television receiver apparatus and the remote control apparatus, includes the power saving means for turning off the power supply to at least one part of means of the television receiver apparatus upon receiving the predetermined instruction signal from the remote control apparatus. Accordingly, it is possible to save power consumption of the television receiver apparatus easily and automatically.

Further, according to the power saving control apparatus and the power saving control method of the present invention, the power saving control apparatus for the television receiver system including the television receiver apparatus and the remote control apparatus, includes the control means for turning off the power supply to the external electronic equipment upon receiving the predetermined instruction signal from the remote control apparatus. Therefore, it is possible to save power consumption of the external electronic equipment easily and automatically.

### BRIEF DESCRIPTION OF THE DRAWINGS

Fig. 1 is a block diagram showing a configuration of a television receiver system including a television receiver apparatus 100 and peripheral apparatuses of the television receiver apparatus 100 according to preferred embodiments of the present invention.
Fig. 2 is a flowchart showing a processing for controlling electric power and for controlling signal transmission, which is executed by an apparatus controller 20 of the television receiver apparatus 100 shown in Fig. 1.
Fig. 3 is a flowchart showing a processing for controlling electric power and for controlling signal transmission according to a modified example, which is executed by the apparatus controller 20 of the television receiver apparatus 100 shown in Fig. 1.

### BEST MODE FOR CARRYING OUT THE INVENTION

Preferred embodiments of the present invention will be described hereinafter with reference to the drawings.

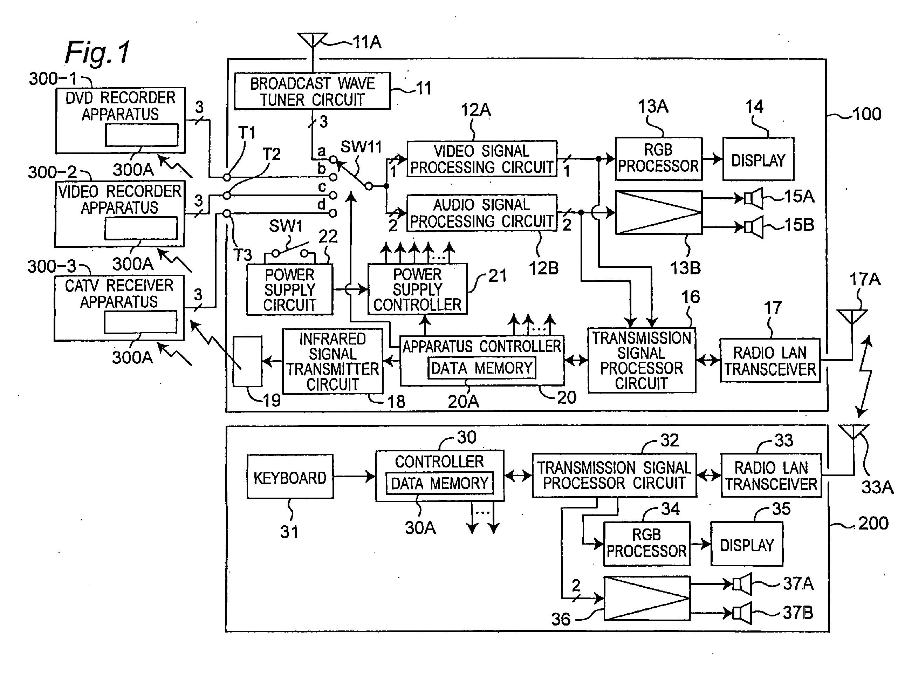

Fig. 1 is a block diagram showing a configuration of a television receiver system including a television receiver apparatus 100 and peripheral apparatuses of the television receiver apparatus 100 according to preferred embodiments of the present invention.

Referring to Fig. 1, the television receiver system is configured to include the followings:
(1) the television receiver apparatus 100;
(2) a remote control apparatus 200 for remotely controlling the television receiver apparatus 100; and
(3) a DVD recorder apparatus 300-1, a video recorder apparatus 300-2, and a CATV receiver apparatus 300-3 (hereinafter generically referred to as external electronic equipments 300), which are respectively connected to the television receiver apparatus 100 and which are external electronic equipments that output video and audio signals to the television receiver apparatus 100.

Referring to Fig. 1, a broadcast wave is received by a broadcast wave tuner circuit 11 via an antenna 11A. The broadcast wave tuner circuit 11 executes processings, such as low noise amplification, frequency conversion, intermediate frequency amplification, and demodulation, on a radio signal on the received broadcast wave. Thereafter, the broadcast wave tuner circuit 11 extracts from the radio signal into video and audio signals, and outputs the video and audio signals to a video signal processing circuit 12A and an audio signal processing circuit 12B via a contact "a" of a switch SW11, respectively. The DVD recorder apparatus 300-1, which is a first external electronic equipment 300, reproduces video and audio signals stored in an optical disk such as a DVD or a VCD, and outputs the reproduced video and audio signals to the video signal processing circuit 12A and the audio signal processing circuit 12B via a contact "b" of the switch SW11 via a terminal T1, respectively. The video recorder apparatus 300-2, which is a second external electronic equipment 300, reproduces video and audio signals recorded on a videotape, and outputs the reproduced video and audio signals to the video signal processing circuit 12A and the audio signal processing circuit 12B via a contact "c" of the switch SW11 via a terminal T2, respectively. The CATV receiver apparatus 300-3, which is a third external electronic equipment 300, receives a CATV signal transmitted from a head end apparatus of CATV via an optical fiber cable or a coaxial cable, decodes video and audio signals, and outputs the decoded video and audio signals to the video signal processing circuit 12A and the audio signal processing circuit 12B via a contact "d" of the switch SW11 via a terminal T3, respectively. It is noted that switchover of the switch SW 11 is controlled by an apparatus controller 20.

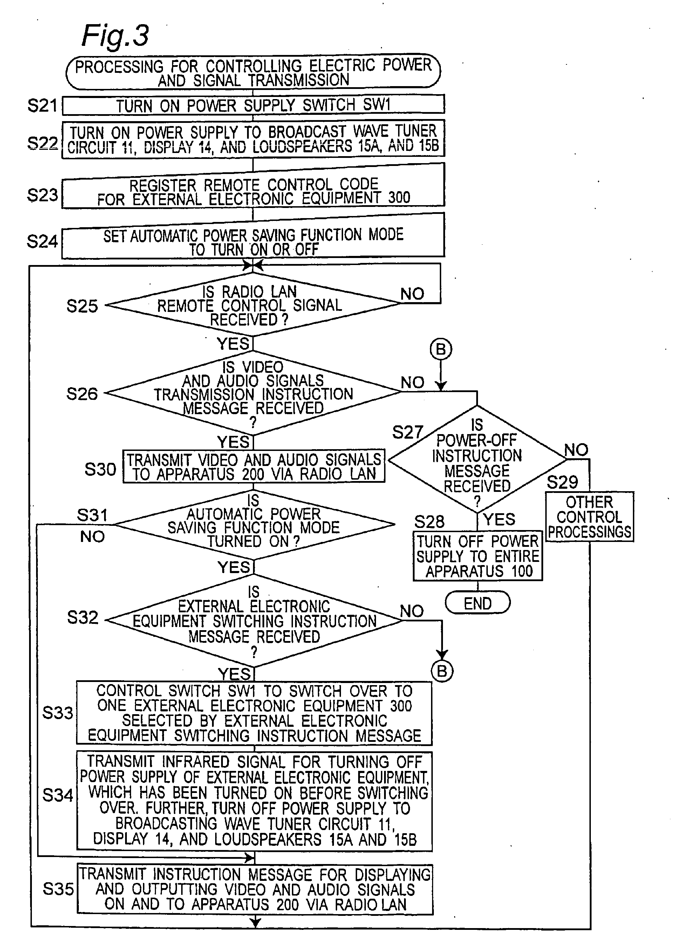

Each of the external electronic equipments 300 includes an infrared receiver section 300A that receives an infrared signal, which is a remote control signal generated by an infrared signal transmitter circuit 18 of the television receiver apparatus 100, and transmitted from an infrared transmitter section 19. The infrared signal generated by the infrared signal transmitter circuit 18 includes an different remote control code registered in a data memory 20A of the apparatus controller 20 in advance (at step S23 of Fig. 3) depending on a corresponding one of a plurality of remotely controlled external electronic equipments 300. The infrared signal identifies the remotely controlled external electronic equipments 300 by the remote control code. Based on a detailed control code added to the remote control code, the infrared signal controls turning on and off power supply to each external electronic equipment 300, turning on and off the output of the video and audio signals from each external electronic equipment 300, selecting a channel of each external electronic equipment 300, and the like. The remote control can be executed not only over each external electronic equipment 300 by the apparatus controller 20 of the television receiver apparatus 100 but also over each external electronic equipment 300 by the remote control apparatus 200 via the television receiver apparatus 100.

Further, the video signal processing circuit 12A executes signal processings, such as descrambling and decoding, on the inputted video signal, and then, outputs the resultant video signal to an RGB processor 13A and a transmission signal processor circuit 16. The audio signal processing circuit 12B executes processings, such as descrambling and decoding, on the inputted audio signals, and then, outputs the resultant audio signals to an amplifier 13B and the transmission signal processor circuit 16. The RGB processor 13A converts the inputted video signal into an RGB signal, and then, outputs the RGB signal to a display 14 such as a plasma display to display the RGB signal on the display 14. The amplifier 13B amplifies powers of inputted audio signals on two channels, and outputs the power-amplified audio signals to two loudspeakers 15A and 15B, respectively.

The transmission signal processor circuit 16 executes digital A/D conversion and predetermined encoding on the video signal inputted from the video signal processing circuit 12A and the audio signals inputted from the audio signal processing circuit 12B, generates a digital transmission signal based on, for example, IEEE802.11 standards, and outputs the generated digital transmission signal to a radio LAN transceiver 17. In addition, the transmission signal processor circuit 16 encodes a remote control signal transmitted from the apparatus controller 20 to the remote control apparatus 200 (which may be one of the remote control signal from the apparatus controller 20 to the remote control apparatus 200, and a remote control signal from the remote control apparatus 200 to the television receiver apparatus 100, and which will be referred to as a radio LAN remote control signal hereinafter), generates a digital transmission signal based on, for example, the IEEE802.11 standards, and outputs the generated digital transmission signal to the radio LAN transceiver 17. The radio LAN transceiver 17 executes processings, such as frequency conversion and power amplification, on the video and audio signals or the inputted digital transmission signal including the radio LAN remote control signal, generates a radio LAN signal based on the above-mentioned standards, and transmits the generated radio LAN signal to the remote control apparatus 200 via an antenna 17A. It is noted that the radio LAN remote control signal, which is transmitted from the apparatus controller 20 to the remote control apparatus 200, includes an instruction message for instructing the remote control apparatus 200 to, for example, display and output the video and audio signals on and to the remote control apparatus 200.

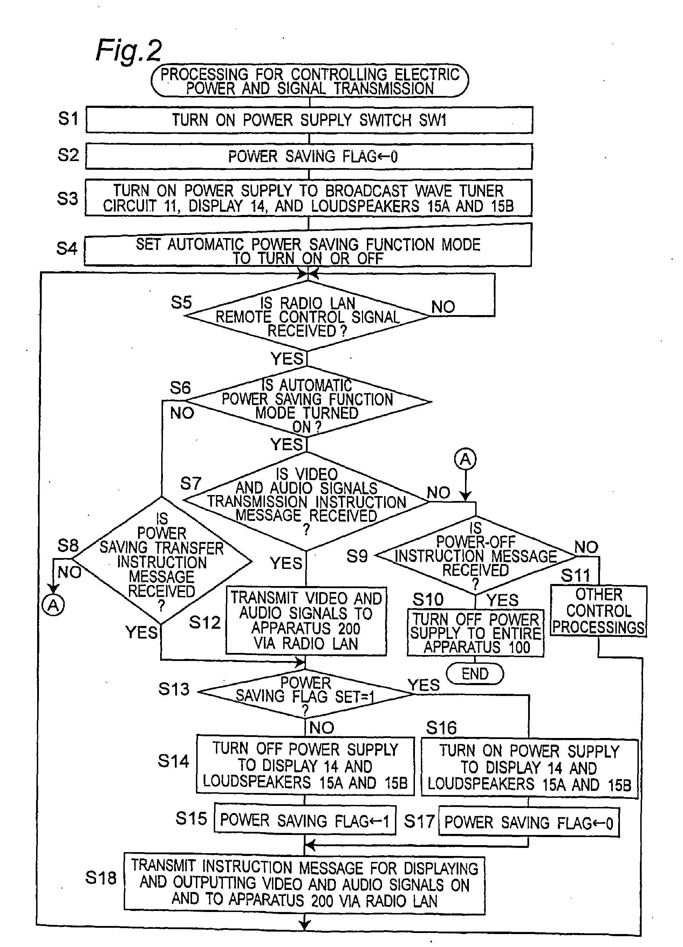

On the other hand, the radio LAN signal received from the remote control apparatus 200 via the antenna 17A is inputted to the radio LAN transceiver 17. The radio LAN transceiver 17 executes processings, such as low noise high frequency amplification, frequency conversion, and demodulation, on the inputted radio LAN signal, generates a digital transmission signal including a remote control signal (hereinafter referred to as a radio LAN remote control signal) for controlling the television receiver apparatus 100 and the external electronic equipments 300, and outputs the generated digital transmission signal to the transmission signal processor circuit 16. The transmission signal processor circuit 16 extracts the radio LAN remote control signal from the received and inputted digital transmission signal, and outputs the extracted radio LAN remote control signal to the apparatus controller 20. It is noted that the radio LAN remote control signal transmitted from the remote control apparatus 200 to the television receiver apparatus 100 includes, for example, the following instruction messages.
(1) A video and audio signals transmission instruction message: the message for instructing the television receiver apparatus 100 to transmit the video and audio signals by radio from the television receiver apparatus 100 to the remote control apparatus 200 via a radio LAN between the radio LAN transceiver 17 and a radio LAN transceiver 33.
(2) A power saving transfer instruction message: the message for instructing the television receiver apparatus 100 to turn off power supply to a part of circuits or devices of the television receiver apparatus 100. In the example of Fig. 2, the power saving transfer instruction message is the message for instructing the television receiver apparatus 100 to turn off the power supply to the display 14 and the loudspeakers 15A and 15B when an automatic power saving function mode is turned off and this instruction message is received.
(3) A power-off instruction message: the message for instructing the television receiver apparatus 100 to turn off the power supply to the entire television receiver apparatus 100.
(4) An external electronic equipment switching instruction message: the instruction message which includes information of one external electronic equipment 300 to be selected by the switch SW11, and which is the message for instructing the television receiver apparatus 100 to control the switch SW11 to switch over to the one external electronic equipment 300 to be selected, and to turn off power supply to the external electronic equipment 300, which has been turned on before switching over. The infrared signal generated by the infrared signal transmitter circuit 18 is used to turn off the power supply to the external electronic equipment 300.

The apparatus controller 20 executes the processing for controlling electric power and for controlling signal transmission shown in Fig. 2 or 3, and then the apparatus controller 20 controls an operation of the entire television receiver apparatus 100, generates a control signal for the infrared signal for use in controlling the external electronic equipment 300, and further controls the power supply controller 21 particularly to save the electric power of the television receiver apparatus 100. A power supply switch SW1 is connected to the power supply circuit 22. When the power supply switch SW1 is turned on, the power supply circuit 22 converts an AC voltage from, for example, an electric power line, into a predetermined AC voltage or DC voltage, and outputs the AC voltage or DC voltage to the power supply controller 21. The power supply controller 21 controls supply of power to the respective circuits or supply of clocks thereto in the television receiver apparatus 100 based on the control signal from the apparatus controller 20, to control the power saving. In addition, the power supply controller 21 executes a transfer control or the like over an IC, LSI or the like having a power saving function to transfer the IC, LSI or the like to a power saving state, to control the power saving. The power supply controller 21 controls on and off of the power supply to the entire television receiver apparatus 100, and controls on and off of the power supply to the broadcast wave tuner circuit 11, the display 14, and the loudspeakers 15A and 15B of the television receiver apparatus 100.

Accordingly, the apparatus controller 20 and the power supply controller 21 constitute a power saving control apparatus that executes a processing for controlling power saving of the television receiver apparatus 100, and that executes a processing for controlling power saving of each external electronic equipment 300.

Next, a configuration and an operation of the remote control apparatus 200 will be described.

The radio LAN transceiver 33 receives via an antenna 33A the radio LAN signal, which is transmitted from the radio LAN transceiver 17 of the television receiver apparatus 100, and which includes the video and audio signals or the radio LAN remote control signal. In addition, the radio LAN transceiver 33 executes processings, such as low noise high frequency amplification, frequency conversion, and demodulation, on the received radio LAN signal, extracts the video and audio signals or the radio LAN remote control signal, and outputs the video and audio signals to an RGB processor 34 and an amplifier 36, respectively, or outputs the radio LAN remote control signal to a controller 30. The RGB processor 34 converts the inputted video signal into the RGB signal, and outputs the RGB signal to a display 35 such as a liquid crystal display so as to display the RGB signal on the display 35. Further, the amplifier 36B amplifies powers of the inputted audio signals on two channels and outputs the power-amplified audio signals to two loudspeakers 37A and 37B, respectively. Then a user can view and listen to an image of the video signal and a voice of the audio signals transmitted from the television receiver apparatus 100 via the radio LAN using the display 35 and the loudspeakers 37A and 37B.

The controller 30 includes a data memory 30A for storing current remote control data, and controls the operation of the entire remote control apparatus 200. The controller 30 converts the instruction message, such as one of the above-stated instruction messages or a reception channel instruction message inputted by the user using a keyboard 31, into a predetermined control signal, and outputs the control signal to a transmission signal processor circuit 32. In addition, the controller 30 controls the operation of the remote control apparatus 200 based on the instruction message from the transmission signal processor circuit 32. Further, the transmission signal processor circuit 32 encodes the remote control signal based on the control signal corresponding to the instruction message from the controller 30, generates a digital transmission signal based on, for example, the IEEE802.11 standards, and outputs the generated digital transmission signal to the radio LAN transceiver 33. The radio LAN transceiver 33 executes processings such as frequency conversion and power amplification on the digital transmission signal, which includes the radio LAN remote control signal, and which is inputted from the transmission signal processor circuit 32, to generate a radio LAN signal based on the above-mentioned standards, and transmits the generated radio LAN signal from the antenna 33A to the television receiver apparatus 100.

Fig. 2 is a flowchart showing the processing for controlling electric power and for controlling signal transmission, which is executed by the apparatus controller 20 of the television receiver apparatus 100 shown in Fig. 1. It is noted that Fig. 2 shows the processing for controlling electric power and for controlling signal transmission particularly when the user views and listens to the video and audio signals received by the broadcast wave tuner circuit 11 using the remote control apparatus 200.

Referring to Fig. 2, the user turns on the power supply switch SW1 at step S 1 and the apparatus controller 20 resets a power saving flag to zero at step S2. In the example of Fig. 2, when the power saving flag is zero, the flag indicates a non-power saving state. When the power saving flag is one, the flag indicates a power saving state. At step S3, the apparatus controller 20 turns on the power supply to the broadcast wave tuner circuit 11, the display 14, and the loudspeakers 15A and 15B. At step S4, the apparatus controller 20 sets the automatic power saving function mode to turn on or off. At step S5, the apparatus controller 20 judges whether or not the radio LAN remote control signal is received. The control flow waits until a judgment result at step S5 becomes YES. When the judgment result becomes YES, the apparatus controller 20 judges whether or not the automatic power saving function mode is turned on at step S6. When a judgment result at step S6 is YES, the control flow proceeds to step S7. On the other hand, when the judgment result at step S6 is NO, the control flow proceeds to step S8.

At step S7, the apparatus controller 20 judges whether or not the video and audio signals transmission instruction message included in the received radio LAN remote control signal is received. When a judgment result at step S7 is YES, the control flow proceeds to step S 12. On the other hand, when the judgment result at step S7 is NO, the control flow proceeds to step S9. At step S9, the apparatus controller 20 judges whether or not the power-off instruction message included in the received radio LAN remote control signal is received. When a judgment result at step S9 is YES, the control flow proceeds to step S10. On the other hand, when the judgment result at step S9 is NO, the control flow proceeds to step S11. At step S 10, the apparatus controller 20 turns off the power supply to the entire television receiver apparatus 100 and terminates this control flow. At step S11, the apparatus controller 20 executes the other control processing, and then, the control flow returns to step S5. At step S12, the apparatus controller 20 transmits the video and audio signals to the remote control apparatus 200 via the radio LAN, and the control flow proceeds to step S13.

At step S8, the apparatus controller 20 judges whether or not the power saving transfer instruction message, which is included in the received radio LAN remote control signal, and which indicates an instruction to transfer a part of the circuits or devices of the television receiver apparatus 100 to the power saving state, is received. When a judgment result at step S8 is YES, the control flow proceeds to step S13. On the other hand, when the judgment result at step S8 is NO, the control flow proceeds to step S9. At step S13, the apparatus controller 20 judges whether or not the power saving flag is set to one. When a judgment result at step S13 is NO, the control flow proceeds to step S14. On the other hand, when the judgment result at step S 13 is YES, the control flow proceeds to step S 16. At step S14, the apparatus controller 20 turns off the power supply to the display 14 and the loudspeakers 15A and 15B to save the electric power consumption, and then, the power saving flag is set to one at step S 15 before the control flow proceeds to step S 18. On the other hand, at step S 16, the apparatus controller 20 turns on the power supply to the display 14 and the loudspeakers 15A and 15B, and the control flow proceeds to step S18. At step S18, the apparatus controller 20 transmits the instruction message for displaying and outputting the video and audio signals on and to the remote control apparatus 200 via the radio LAN, and the control flow returns to step S5.

As stated so far, according to the processing for controlling electric power and for controlling signal transmission shown in Fig. 2, when the power saving transfer instruction message included in the received radio LAN remote control signal is received (YES at step S8), and when the television receiver apparatus 100 is not in the power saving state (i.e., when the power saving flag is set to zero; NO at step S 13), the power supply to the display 14 and the loudspeakers 15A and 15B are turned off at step S 14 to make it possible to save the electric power in accordance with the power saving transfer instruction message from the remote control apparatus 200. In addition, when the automatic power saving function mode is turned on (YES at step S6), and when the video and audio signals transmission instruction message is received (YES at step S7), the video and audio signals are transmitted to the remote control apparatus 200 (at step S12). At this time, it is unnecessary for the user to view and listen to the video and audio signals on a main body of the television receiver apparatus 100. Therefore, at step S 14, the power supply to the display 14 and the loudspeakers 15A and 15B are automatically turned off to make it possible to save the electric power consumption.

Fig. 3 is a flowchart showing a processing for controlling electric power and for controlling signal transmission according to a modified example, which is executed by the apparatus controller 20 of the television receiver apparatus 100 shown in Fig. 1. Fig. 3 shows the processing for controlling electric power and for controlling signal transmission particularly when the user views and listens to the video and audio signals outputted from one of the external electronic equipments 300 using the remote control apparatus 200. It is noted that the processings shown in Figs. 2 and 3 may be selectively executed according to the switching of the switch SW 11.

At step S21 shown in Fig. 3, the user turns on the power supply switch SW 1. At step S22, the apparatus controller 20 then turns on the power supply to the display 14 and the loudspeakers 15A and 15B. At step S23, the apparatus controller 20 registers the remote control codes for the respective external electronic equipments 300. Once the remote control codes are registered, they are stored in the data memory 20A. Therefore, it is unnecessary to execute the control flow at step S23 thereafter except that the registration is changed. At step S24, the apparatus controller 20 sets the automatic power saving function mode to turn on or off, and the control flow proceeds to step S25.

At step S25, the apparatus controller 20 judges whether or not the radio LAN remote control signal is received. The control flow at step S25 is executed until a judgment result becomes YES. When the judgment result becomes YES, the apparatus controller 20 judges whether or not the video and audio signals transmission instruction message included in the received radio LAN remote control signal is received at step S26. When a judgment result at step S26 is YES, the control flow proceeds to step S30. On the other hand, when the judgment result at step S26 is NO, the control flow proceeds to step S27. At step S27, the apparatus controller 20 judges whether or not the power-off instruction message included in the received radio LAN remote control signal is received. When a judgment result at step S27 is YES, the apparatus controller 20 turns off the power supply to the television receiver apparatus 100 at step S28 and terminates this control flow. On the other hand, when the judgment result at step S27 is NO, the control flow proceeds to step S29. At step S29, the apparatus controller 20 executes the other control processing, and then, the control flow returns to step S25.

At step S30, the apparatus controller 20 transmits the video and audio signals to the remote control apparatus 200 via the radio LAN. At step S31, the apparatus controller 20 judges whether or not the automatic power saving function mode is turned on. When a judgment result at step S31 is YES, the control flow proceeds to step S32. On the other hand, when the judgment result at step S31 is NO, the control flow proceeds to step S35. At step S32, the apparatus controller 20 judges whether or not the external electronic equipment switching instruction message included in the received radio LAN remote control signal is received. When a judgment result at step S32 is YES, the control flow proceeds to step S33. On the other hand, when the judgment result at step S32 is NO, the control flow proceeds to step S27. At step S33, the apparatus controller 20 controls the switch SW 11 to switch over to one external electronic equipment 300 selected by the external electronic equipment switching instruction message. At step S34, the apparatus controller 20 transmits the infrared signal for turning off the power supply to the external electronic equipment 300, which has been turned on before switching over. Further, the apparatus controller 20 turns off the power supply to the broadcast wave tuner circuit 11, the display 14 and the loudspeakers 15A and 15B, and the control flow proceeds to step S35. At step S35, the apparatus controller 20 transmits the instruction message for displaying and outputting the video and audio signals on and to the remote control apparatus 200 via the radio LAN, and the control flow returns to step S25.

As stated so far, according to the processing for controlling electric power and for controlling signal transmission shown in Fig. 3, when the video and audio signals transmission instruction message included in the remote control signal from the remote control apparatus 200 is received (YES at step S26), the video and audio signals are transmitted to the remote control apparatus 200 (at step S30). At this time, when the automatic power saving function mode is turned on (YES at step S31), and when the external electronic equipment switching instruction message is received from the remote control apparatus 200 (YES at step S32), the apparatus controller 20 controls the switch SW 11 to switch over to one external electronic equipment 300 selected by the external electronic equipment switching instruction message at step S33, transmits the infrared signal for turning off the power supply to the external electronic equipment 300, which has been turned on before switching over, and automatically turns off the power supply to the broadcast wave tuner circuit 11, the display 14, and the loudspeakers 15A and 15B at step S34. In this case, it is possible to save the electric power consumption.

At step S34 shown in Fig. 3, the power supply to the broadcast wave tuner circuit 11, the display 14, and the loudspeakers 15A and 15B are turned off. However, the present invention is not limited to this. At least one of the power supply to the broadcast wave tuner circuit 11, and the power supply to the display 14 and the loudspeakers 15A and 15B may be turned off.

As stated so far, according to the prior arts, if the video and audio signals are transmitted by radio between the television receiver apparatus 100 and the remote control apparatus 200 for the television receiver apparatus 100, and if such an audio and visual environment is supposed that the user views and listens television programs using the remote control apparatus 200 away from the television receiver apparatus 100 such as in a different room, the video and audio output functions of the main body of the television receiver apparatus 100 always output the video and audio signals despite no need to do so. As a result, the electric power is wastefully consumed. On the other hand, according to the present preferred embodiments, the user intentionally depresses an operation button for the power saving transfer instruction using the keyboard 31 of the remote control apparatus 200 or depresses the operation button for transmitting the video and audio signals to the remote control apparatus 200 by radio, this leads to that the television receiver apparatus 100 is transferred to the power saving state manually or automatically, and the unnecessary power consumption can be easily saved.

Further, according to the prior arts, when a plurality of external electronic equipments 300 are connected to the television receiver apparatus 100, the external electronic equipments 300 other than the external electronic equipment that is used by a user to view and listen television programs are away from the television receiver apparatus 100. Due to this, it is difficult for the user to recognize the power supply state of the external electronic equipments 300. As a result, the unused external electronic equipments 300 are intentionally kept to be turned on, and the electric power is wastefully consumed. On the other hand, according to the present embodiments, the user depresses the operation button for switching over to one external electronic equipments 300 using the keyboard 31 of the remote control apparatus 200, this leads to that the user can view and listen to the video and audio signals from the selected external electronic equipment using the remote control apparatus 200. Simultaneously, the power supply to the external electronic equipment 300 having been selected, which has been turned on before switching over, can be automatically turned off. Therefore, it is possible to save the electric power consumption of the external electronic equipment 300 easily.

### INDUSTRIAL APPLICABILITY

As stated so far in detail, according to the power saving control apparatus and the power saving control method of the present invention, the power saving control apparatus for the television receiver system including the television receiver apparatus and the remote control apparatus, includes the power saving means for turning off the power supply to at least one part of means of the television receiver apparatus upon receiving the predetermined instruction signal from the remote control apparatus. Therefore, it is possible to save the electric power consumption of the television receiver apparatus easily and automatically.

Further, according to the power saving control apparatus and the power saving control method of the present invention, the power saving control apparatus for the television receiver system including the television receiver apparatus and the remote control apparatus, includes the control means for turning off the power supply to the external electronic equipment upon receiving the predetermined instruction signal from the remote control apparatus. Therefore, it is possible to save the electric power consumption of the external electronic equipment easily and automatically.

## Claims

1. A power saving control apparatus for a television receiver system, said television receiver system comprising:
a television receiver apparatus for outputting one of video and audio signals on a received broadcast wave and video and audio signals inputted from an external electronic equipment, and transmitting the video and audio signals by radio; and
a remote control apparatus for controlling an operation of said television receiver apparatus, and receiving and outputting the video and audio signals transmitted by radio,
wherein said power saving control apparatus comprises power saving means for turning off power supply to at least one part of means of said television receiver apparatus upon receiving a predetermined instruction signal from said remote control apparatus.

2. The power saving control apparatus as claimed in claim 1,
wherein the instruction signal is a power saving transfer instruction message for instructing said television receiver apparatus to transfer to a power saving state by turning off the power supply to at least one part of means of said television receiver apparatus.

3. The power saving control apparatus as claimed in claim 1,
wherein the instruction signal is a video and audio signals transmission instruction message for instructing said television receiver apparatus to transmit the video and audio signals from said television receiver apparatus to said remote control apparatus by radio.

4. The power saving control apparatus as claimed in claim 1,
wherein the instruction signal is a video and audio signals transmission instruction message for instructing said television receiver apparatus to transmit the video and audio signals from said television receiver apparatus to said remote control apparatus by radio, and
wherein said power saving means turns off the power supply to at least one part of means of said television receiver apparatus, upon receiving the instruction signal from said remote control apparatus, and in an automatic power saving function mode set in said television receiver apparatus.

5. The power saving control apparatus as claimed in any one of claims 1 to 4,
wherein at least one part of means of said television receiver apparatus includes display means for displaying an image of the video signal, and audio output means for outputting a voice of the audio signal.

6. A power saving control method for a television receiver system, said television receiver system comprising:
a television receiver apparatus for outputting one of video and audio signals on a received broadcast wave and video and audio signals inputted from an external electronic equipments, and transmitting the video and audio signals by radio; and
a remote control apparatus for controlling an operation of said television receiver apparatus, and receiving and outputting the video and audio signals transmitted by radio,
wherein said power saving control method includes a power saving step of turning off power supply to at least one part of means of said television receiver apparatus upon receiving a predetermined instruction signal from said remote control apparatus.

7. The power saving control method as claimed in claim 6,
wherein the instruction signal is a power saving transfer instruction message for instructing said television receiver apparatus to transfer to a power saving state by turning off the power supply to at least one part of means of said television receiver apparatus.

8. The power saving control method as claimed in claim 6,
wherein the instruction signal is a video and audio signals transmission instruction message for instructing said television receiver apparatus to transmit the video and audio signals from said television receiver apparatus to said remote control apparatus by radio.

9. The power saving control method as claimed in claim 6,
wherein the instruction signal is a video and audio signals transmission instruction message for instructing said television receiver apparatus to transmit the video and audio signals from said television receiver apparatus to said remote control apparatus by radio, and
wherein said power saving step turns off the power supply to at least one part of means of said television receiver apparatus, upon receiving the instruction signal from said remote control apparatus, and in an automatic power saving function mode set in said television receiver apparatus.

10. The power saving control method as claimed in any one of claims 6 to 9,
wherein at least one part of means of said television receiver apparatus includes display means for displaying an image of the video signal, and audio output means for outputting a voice of the audio signal.

11. A power saving control apparatus for a television receiver system, said television receiver system comprising:
a television receiver apparatus for outputting video and audio signals inputted from an external electronic equipment, and transmitting the video and audio signals by radio; and
a remote control apparatus for controlling an operation of said television receiver apparatus, controlling an operation of said external electronic equipment via said television receiver apparatus, and receiving and outputting the video and audio signals transmitted by radio,
wherein said power saving control apparatus comprises control means for controlling turning off power supply to said external electronic equipment upon receiving a predetermined instruction signal from said remote control apparatus.

12. The power saving control apparatus as claimed in claim 11,
wherein said television receiver apparatus further comprises switching means for selectively switching video and audio signals from a plurality of external electronic equipments, and for outputting the selected video and audio signals, and
wherein said control means controls said switching means to selectively switch over to one of the plurality of external electronic equipments, and controls turning off power supply to one of the external electronic equipments having been selected before switching over upon receiving an instruction signal including an external electronic equipment switching instruction message for selectively switching over to the one of the plurality of external electronic equipments from said remote control apparatus.

13. The power saving control apparatus as claimed in claim 12,
wherein said control means transmits the video and audio signals from said selected external electronic equipment to said remote control apparatus by radio.

14. The power saving control apparatus as claimed in claim 13,
wherein said control means turns off power supply to at least one part of means of said television receiver apparatus.

15. The power saving control apparatus as claimed in claim 14,
wherein at least one part of means of said television receiver apparatus includes at least one of:
(1) reception means for receiving a broadcast wave of said television receiver apparatus; and
(2) display means for displaying an image of the video signal, and audio output means for outputting a voice of the audio signal.

16. A power saving control method for a television receiver system, said television receiver system comprising:
a television receiver apparatus for outputting video and audio signals inputted from an external electronic equipment, and transmitting the video and audio signals by radio; and
a remote control apparatus for controlling an operation of said television receiver apparatus, controlling an operation of said external electronic equipment via said television receiver apparatus, and receiving and outputting the video and audio signals transmitted by radio,
wherein the power saving control method includes a control step of controlling turning off power supply to said external electronic equipment upon receiving a predetermined instruction signal from said remote control apparatus.

17. The power saving control method as claimed in claim 16,
wherein said television receiver apparatus further comprises switching means for selectively switching video and audio signals from a plurality of external electronic equipments, and for outputting the selected video and audio signals, and
wherein said control step controls said switching means to selectively switch over to one of the plurality of external electronic equipments, and controls turning off power supply to one of the external electronic equipments having been selected before switching over upon receiving an instruction signal including an external electronic equipment switching instruction message for selectively switching over to the one of the plurality of external electronic equipments from said remote control apparatus.

18. The power saving control method as claimed in claim 17,
wherein said control step transmits the video and audio signals from said selected external electronic equipment to said remote control apparatus by radio.

19. The power saving control method as claimed in claim 18,
wherein said control step turns off power supply to at least one part of means of said television receiver apparatus.

20. The power saving control method as claimed in claim 19,
wherein at least one part of means of said television receiver apparatus includes at least one of:
(1) reception means for receiving a broadcast wave of said television receiver apparatus; and
(2) display means for displaying an image of the video signal, and audio output means for outputting a voice of the audio signal.

21. A television receiver apparatus for outputting one of video and audio signals on a received broadcast wave and video and audio signals inputted from an external electronic equipment, and transmitting the video and audio signals by radio,
wherein said television receiver apparatus comprises said power saving control apparatus as claimed in any one of claims 1 to 5.

22. A television receiver system comprising:
a television receiver apparatus for outputting one of video and audio signals on a received broadcast wave and video and audio signals inputted from an external electronic equipment, and transmitting the video and audio signals by radio; and
a remote control apparatus for controlling an operation of said television receiver apparatus, and receiving and outputting the video and audio signals transmitted by radio,
wherein said television receiver system comprises said power saving control apparatus as claimed in any one of claims 1 to 5.

23. A television receiver apparatus for outputting video and audio signals inputted from an external electronic equipment, and transmitting the video and audio signals by radio,
wherein said television receiver apparatus comprises said power saving control apparatus as claimed in any one of claims 11 to 15.

24. A television receiver system comprising:
a television receiver apparatus for outputting video and audio signals inputted from an external electronic equipment, and transmitting the video and audio signals by radio; and
a remote control apparatus for controlling an operation of said television receiver apparatus, controlling said external electronic equipment via said television receiver apparatus, and receiving and outputting the video and audio signals transmitted by radio,
wherein said television receiver system comprises said power saving control apparatus as claimed in any one of claims 11 to 15.
